# FASCICULE DE BREVET EUROPEEN

(11) **EP 4 476 135 B1**
(45) Date de publication et mention de la délivrance du brevet: **24.12.2025**
(21) Numéro de dépôt: 23708701.0
(22) Date de dépôt: 08.02.2023
(51) Int. Cl.: B64C 25/00, B64C 25/22, B64C 25/24, B64D 41/00

(54) **JAMBE POUR ATTERRISSEUR D'AERONEF EQUIPE D'UN ACCUMULATEUR, ATTERRISSEUR COMPRENANT UNE TELLE JAMBE ET AERONEF COMPRENANT AU MOINS UN TEL ATTERRISSEUR**
FLUGZEUGFAHRWERKSBEIN, FLUGZEUGFAHRWERK MIT EINEM DERARTIGEN FAHRWERKSBEIN SOWIE FLUGZEUG MIT MINDESTENS EINEM SOLCHEN FAHRWERK
AIRCRAFT LANDING GEAR LEG EQUIPPED WITH AN ACCUMULATOR, LANDING GEAR COMPRISING SUCH A LEG AND AIRCRAFT COMPRISING AT LEAST ONE OF THESE LANDING GEARS

(30) Priorité: 08.02.2022 FR 2201073
(43) Date de publication de la demande: 18.12.2024
(73) Titulaire: Safran Landing Systems, 78140 Vélizy-Villacoublay (FR)
(72) Inventeur: DOUX, Aurélien, 77550 MOISSY-CRAMAYEL (FR); FRANK, David, 77550 MOISSY-CRAMAYEL (FR)
(74) Mandataire: Cabinet Boettcher
(86) Numéro de dépôt international: PCT/EP2023/053038
(87) Numéro de publication internationale: WO 2023/152149

(56) Documents cités:
- EP-A1- 3 546 349
- FR-A- 842 612
- FR-A1- 3 018 501
- GB-A- 520 994
- GB-A- 520 995
- US-A- 4 634 082

## Description

La présente invention concerne le domaine des trains d'atterrissage et plus particulièrement l'intégration d'un accumulateur dans un atterrisseur d'aéronef.

### ARRIERE PLAN DE L'INVENTION

On connaît des aéronefs munis d'atterrisseurs escamotables, de soutes destinées à recevoir ces atterrisseurs lorsque l'aéronef est en vol, et de trappes pour fermer ces soutes. Un atterrisseur comprend généralement une jambe ayant une première extrémité reliée à une structure de l'aéronef et une deuxième extrémité pourvue d'un essieu sur lequel sont montées des roues permettant de manœuvrer l'aéronef au sol (roulage, freinage, orientation...) . Au moins l'une des roues est équipée d'un frein comportant des éléments de friction, tels que des disques, solidaires pour certains de la roue et pour d'autres d'un stator, et d'un vérin hydraulique agencé pour exercer sur les éléments de friction un effort suffisant pour bloquer en rotation la roue.

En mode normal, les atterrisseurs sont généralement déployés au moyen d'un circuit hydraulique comportant des composants hydrauliques adaptés à travailler en séquence pour déverrouiller et ouvrir les trappes des atterrisseurs, puis déverrouiller et/ou déployer les atterrisseurs, et éventuellement refermer et re-verrouiller au moins certaines trappes. Le circuit hydraulique comprend également des composants hydrauliques adaptés pour commander le freinage des roues des atterrisseurs.

En cas de défaillance du circuit hydraulique, il est prévu des moyens de secours pour assurer l'ouverture des trappes et/ou le déploiement des atterrisseurs et/ou le freinage des roues. Les moyens de secours peuvent comprendre une réserve d'énergie hydraulique agencée pour alimenter, en mode secours, les freins de roue et les actionneurs de déverrouillage des atterrisseurs et des trappes.

Cette réserve d'énergie comprend un ou deux accumulateurs hydrauliques qui sont généralement logés dans les soutes à proximité des atterrisseurs du fait de leur encombrement, de leur masse et de la réglementation (European Union Aviation Safety Agency, Federal Aviation Administration...) qui impose une séparation physique entre l'accumulateur et les équipements qui l'entourent d'une distance pouvant aller jusqu'à 1,54 mètre pour pallier tout risque d'explosion.

Or, l'intégration des accumulateurs dans les soutes s'avère compliquée en raison du peu d'espace disponibles dans lesdites soutes.

On connaît également l'installation d'accumulateurs hydrauliques fixes dans la jambe du train d'atterrissage et le document GB 520995 A1 illustre cet état de l'art.

### OBJET DE L'INVENTION

L'invention a pour but de proposer une solution remédiant au moins en partie aux inconvénients précités.

### RESUME DE L'INVENTION

A cet effet, on propose une jambe pour atterrisseur d'aéronef comprenant un caisson agencé pour reprendre des efforts d'atterrissage et pourvu d'une cavité dans laquelle est logé un accumulateur d'énergie sous forme d'une cartouche insérable dans cette cavité.

Ainsi, le caisson assure deux fonctions, à savoir la reprise des efforts d'atterrissage et le logement de l'accumulateur d'énergie. En outre, le caisson peut être agencé pour protéger mécaniquement l'accumulateur.

De manière particulière, l'accumulateur est hydraulique.

De manière particulière, l'accumulateur est une batterie électrochimique.

Selon un mode de réalisation particulier de l'invention, la jambe comprend une tige formant amortisseur coulissant dans le caisson, une extrémité de la tige portant au moins une roue.

Selon une variante de l'invention, la jambe comprend un balancier articulé sur le caisson et un amortisseur reliant le balancier au caisson, une extrémité du balancier portant au moins une roue.

L'invention concerne aussi un atterrisseur d'aéronef comprenant une telle jambe.

L'invention concerne également un aéronef comprenant au moins un tel atterrisseur.

De manière particulière, le caisson de l'atterrisseur est articulé sur une structure de l'aéronef.

L'invention concerne en outre un procédé de déploiement de secours d'un tel atterrisseur mettant en œuvre l'accumulateur intégré à la jambe de l'atterrisseur.

### BREVE DESCRIPTION DES DESSINS

L'invention sera mieux comprise à la lumière de la description qui suit, laquelle est purement illustrative et non limitative, et doit être lue en regard des figures annexées parmi lesquelles :
[Fig.1] la figure 1 est une vue schématique d'un aéronef comprenant des atterrisseurs escamotables ;
[Fig.2] la figure 2 est une vue schématique des atterrisseurs de l'aéronef illustré à la figure 1 ;
[Fig.3] la figure 3 illustre une jambe, selon un mode de réalisation particulier de l'invention, de l'un des atterrisseurs illustrés à la figure 2 ;
[Fig.4] la figure 4 illustre une variante de la jambe illustrée à la figure 3.

### DESCRIPTION DETAILLEE DE L'INVENTION

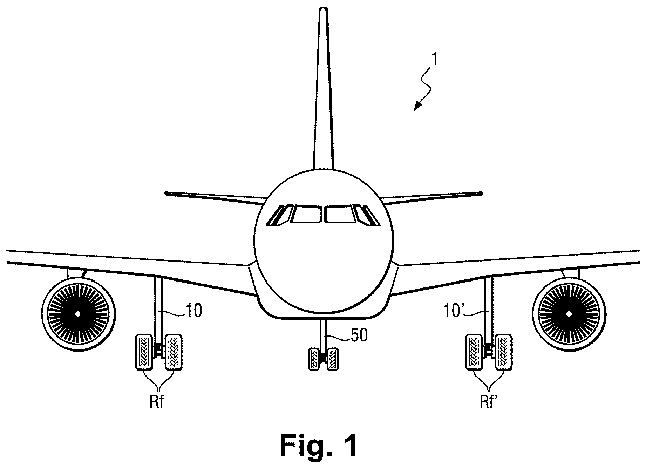

Comme illustrée à la figure 1, l'invention est ici décrite en application à un aéronef 1 comportant deux atterrisseurs principaux 10 et un atterrisseur auxiliaire avant 50.

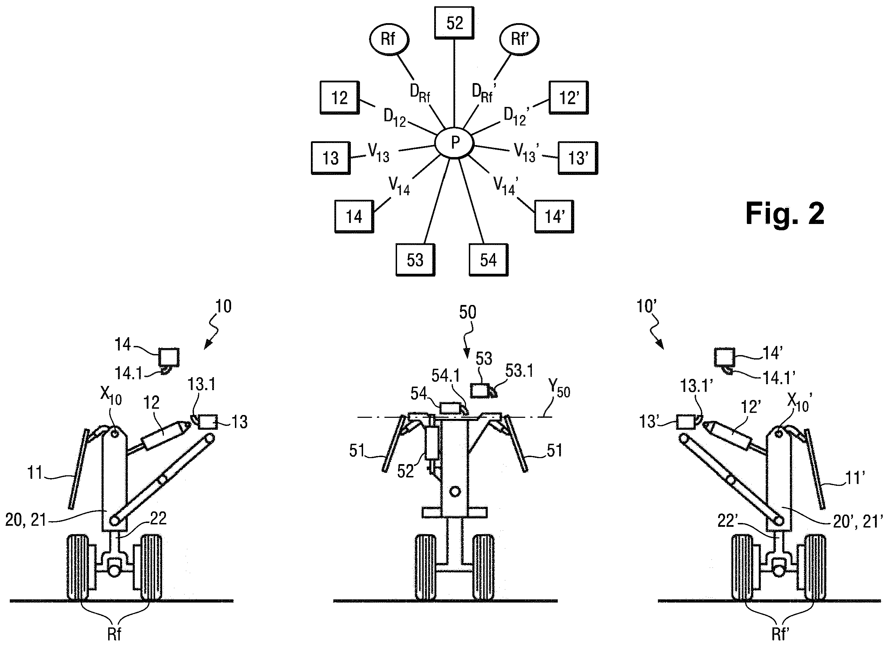

En référence à la figure 2, les atterrisseurs principaux 10 sont articulés sur une structure de l'aéronef 1 autour d'un axe X₁₀, X₁₀' sensiblement parallèle à une direction d'avancement dudit aéronef 1, entre une position déployée illustrée ici et une position rétractée dans laquelle les atterrisseurs principaux 10, 10' sont reçus dans une soute refermable par une trappe 11, 11'. Des vérins 12, 12' hydrauliques double effet sont attelés aux atterrisseurs principaux 10, 10' et permettent de manœuvrer ceux-ci entre la position déployée et la position rétractée. Les atterrisseurs principaux 10, 10' sont maintenus en positon rétractée par des boîtiers d'accrochage 13, 13' munis de crochets 13.1, 13.1' permettant de crocheter des olives solidaires des atterrisseurs principaux 10, 10' lorsque ces derniers arrivent en position rétractée. Le décrochetage des crochets 13.1, 13.1' est commandé par des actionneurs de déverrouillage hydromécaniques (non représentés) qui sont ici intégrés dans les boîtiers d'accrochage 13, 13'.

De manière similaire, des vérins (non représentés) sont attelés aux trappes 11, 11' et permettent de manœuvrer celles-ci entre une position ouverte permettant le déploiement et la rétraction des atterrisseurs principaux 10, 10', et une position fermée refermant les soutes. Les trappes 11, 11' sont maintenues en position fermée par des boîtiers d'accrochage 14, 14' solidaire de la structure de l'aéronef 1. Les boîtiers d'accrochage 14, 14' sont munis de crochets 14.1, 14.1' permettant de crocheter des olives solidaires des trappes 11, 11' lorsque ces dernières arrivent en position fermée. Le décrochetage des crochets 14.1, 14.1' est commandé par des actionneurs de déverrouillage hydromécaniques (non représentés) qui sont ici intégrés dans les boîtiers d'accrochage 14, 14'.

Les vérins 12, 12' servant à manœuvrer les atterrisseurs principaux 10, 10' sont commandés par un distributeur D₁₂, D₁₂' relié à une source de fluide sous pression P. Les actionneurs de déverrouillage permettant de désactiver les boîtiers d'accrochage 13, 13', 14, 14' sont commandés par une vanne V₁₃, V₁₃', V₁₄, V₁₄' reliée à la source de fluide sous pression P.

L'atterrisseur auxiliaire 50 est articulé sur la structure de l'aéronef 1 autour d'un axe Y₅₀ sensiblement orthogonal à une direction d'avancement dudit aéronef 1, entre une position déployée illustrée ici et une position rétractée dans laquelle l'atterrisseur auxiliaire est reçu dans une soute refermable par des trappes 51. Un vérin 52 hydraulique double effet est attelé à l'atterrisseur auxiliaire 50 et permet de manœuvrer celui-ci entre la position déployée et la position rétractée. L'atterrisseur auxiliaire 50 est maintenu en positon rétractée par un boîtier d'accrochage 53 muni d'un crochet 53.1 permettant de crocheter une olive solidaire de l'atterrisseur auxiliaire lorsque ce dernier arrive en position rétractée. Le décrochetage du crochet 53.1 est commandé par un actionneur de déverrouillage hydromécanique (non représenté) qui est ici intégré dans le boîtier d'accrochage 53.

De manière similaire, des vérins (non représentés) sont attelés aux trappes 51 et permettent de manœuvrer celles-ci entre une position ouverte permettant le déploiement et la rétraction de l'atterrisseur auxiliaire 50 et une position fermée refermant les soutes. Les trappes 51 sont maintenues en position fermée par un boîtier d'accrochage 54 solidaire de la structure de l'aéronef 1. Le boîtier d'accrochage 54 est muni d'un crochet 54.1 permettant de crocheter des olives solidaires des trappes 51 lorsque des dernières arrivent en position fermée. Le décrochetage du crochet 54.1 est commandé par un actionneur de déverrouillage hydromécanique (non représenté) qui est ici intégré dans le boîtier d'accrochage 54.

Le vérin 52 servant à manœuvrer l'atterrisseur auxiliaire 50 est commandé par un distributeur D₅₂ relié à la source de fluide sous pression P. Les actionneurs de déverrouillage permettant de désactiver les boîtiers d'accrochage 53, 54 sont commandés par une vanne V₅₃, V₅₄, reliée à la source de fluide sous pression P.

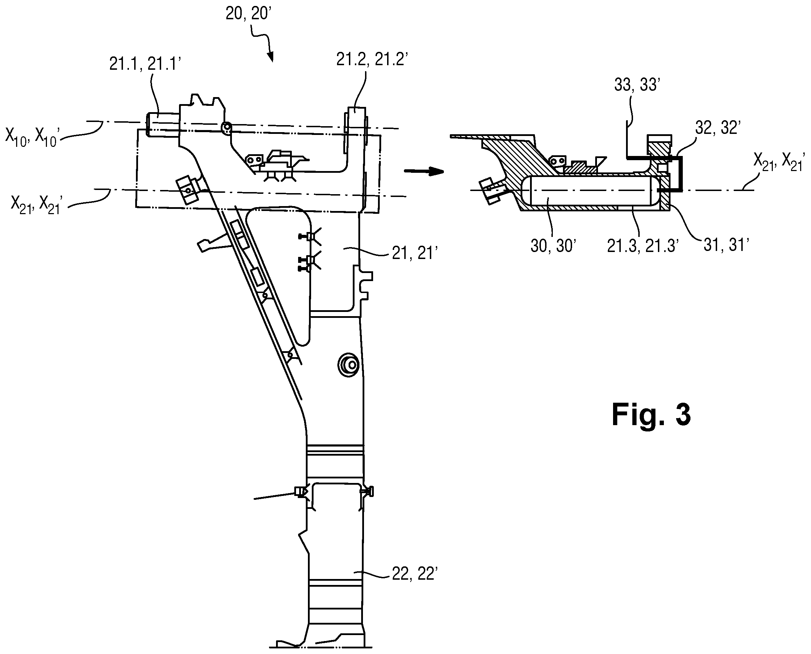

En référence aux figures 2 et 3, les atterrisseurs principaux 10, 10' comprennent une jambe 20, 20' comportant un caisson 21, 21' rigide dans lequel coulisse une tige 22, 22' télescopique formant amortisseur. Une extrémité de la tige 22, 22' est pourvue d'un essieu sur lequel au moins une roue R_{f}, R_{f}' est montée à rotation. La roue R_{f}, R_{f}' est équipée d'un frein qui est commandé par un distributeur D_{Rf}, D_{Rf}' relié à la source de fluide sous pression P.

Le caisson 21, 21' est de forme globalement triangulaire et a une base venant s'articuler sur la structure de l'aéronef 1 par l'intermédiaire de deux pivots 21.1, 21.2, 21.1', 21.2' d'axe X₁₀, X₁₀', le sommet opposé à la base constituant un logement dans lequel coulisse la tige 22.

La base du caisson 21, 21' s'étend selon un axe X₂₁, X₂₁' sensiblement parallèle à l'axe X₁₀ et comprend, selon l'invention, une cavité 21.3, 21.3' dans laquelle est intégralement logé un accumulateur hydraulique 30, 30'. La cavité 21.3, 21.3' et l'accumulateur sont de forme globalement cylindrique et s'étendent coaxialement suivant l'axe X₂₁, X₂₁'. Une surface extérieure de l' accumulateur 30, 30' est ici conformée pour coopérer avec une surface intérieure de la cavité 21.3, 21.3' de manière à réaliser un centrage court de l'accumulateur 30, 30' dans ladite cavité 21.3, 21.3'. La surface extérieure comprendra par exemple trois bossages répartis à 120 degrés et formant une portée sensiblement cylindrique. Une platine de centrage verrouillée par un segment ménagé à une extrémité de la cavité 21.3, 21.3' assure l'immobilisation de l'accumulateur à l'intérieur de ladite cavité 21.3, 21.3'.

L'accumulateur 30, 30' a ici un diamètre sensiblement égal à 120 millimètres et une longueur sensiblement égale à 570 millimètres pour un volume intérieur utile sensiblement égal à 6 litres.

L'extrémité de la cavité 21.3, 21.3' débouche sur un côté du caisson 21, 21' et permet à l'accumulateur 30, 30' d'être inséré telle une cartouche amovible dans ladite cavité 21.3, 21.3'. Un obturateur 31, 31' pouvant être solidaire de l'accumulateur 30, 30' vient refermer la cavité 21.3, 21.3' afin d'isoler ledit accumulateur 30, 30' de l'extérieur et ainsi le protéger des agressions extérieures (projections d'eau, de graviers...). On note par ailleurs que le caisson 21, 21' est dimensionné pour supporter les efforts d'atterrissage et que ce dimensionnement lui permet de résister à un éventuel éclatement de l'accumulateur 30, 30'.

L'accumulateur 30, 30' forme une réserve de fluide sous pression reliée :
- à tout ou partie des boitiers d'accrochage 13, 13' de manière à permettre le décrochetage des crochets 13.1, 13.1' et donc le déploiement des atterrisseurs principaux 10, 10' en cas de défaillance de la source de fluide sous pression P ou du circuit hydraulique reliant ladite source de fluide sous pression P auxdits boitiers d'accrochage 13, 13' ; et/ou
- à tout ou partie des boitiers d'accrochage 14, 14' de manière à permettre le décrochetage des crochets 14.1, 14.1' et donc l'ouverture des trappes 11, 11' en cas de défaillance de la source de fluide sous pression P ou du circuit hydraulique reliant ladite source de fluide sous pression P auxdits boitiers d'accrochage 14, 14' ; et/ou
- à tout ou partie des freins des roues R_{f}, R_{f}' de manière à permettre le freinage desdites roues R_{f}, R_{f}' et donc le ralentissement et le maintien à l'arrêt de l'aéronef 1 en cas de défaillance de la source de fluide sous pression P ou du circuit hydraulique reliant ladite source de fluide sous pression P auxdits freins des roues R_{f}, R_{f}' .

L'accumulateur 30, 30' forme ainsi une source d'énergie de secours permettant d'alimenter les boîtiers d'accrochage 13, 13', 14, 14' et/ou les freins des roues R_{f}, R_{f}' en cas de défaillance du circuit d'alimentation principal de l'aéronef 1.

L'accumulateur 30, 30' est ici relié aux actionneurs de déverrouillage des boitiers d'accrochage 13, 13', 14, 14' via un tuyau rigide 32, 32' traversant l'obturateur 31, 31' et qui est fixé sur le caisson 21, 21'. Le tuyau rigide 32, 32' comprend une première extrémité connectée à un port de sortie de l'accumulateur 30, 30', et une deuxième extrémité raccordée à un tuyau souple 33, 33' autorisant le déploiement et le relevage de l'atterrisseur 10, 10'.

L'accumulateur 30, 30' pourra aussi être relié :
- au boitier d'accrochage 53 de manière à permettre le décrochetage du crochet 53.1 et donc le déploiement de l'atterrisseur auxiliaire 50 en cas de défaillance de la source de fluide sous pression P ou du circuit hydraulique reliant ladite source de fluide sous pression P audit boitier d'accrochage 53 ; et/ou
- au boitier d'accrochage 54 de manière à permettre le décrochetage du crochet 54 et donc l'ouverture des trappes 51 en cas de défaillance de la source de fluide sous pression P ou du circuit hydraulique reliant ladite source de fluide sous pression P audit boitier d'accrochage 54 ; et/ou
- à d'éventuels freins de roues équipant l'atterrisseur 50 de manière à permettre le freinage de ces roues et donc le ralentissement et le maintien à l'arrêt de l'aéronef 1 en cas de défaillance de la source de fluide sous pression P ou du circuit hydraulique reliant ladite source de fluide sous pression P auxdits éventuels freins de roues.

L'accumulateur 30, 30' formera alors une source d'énergie de secours permettant d'alimenter les boîtiers d'accrochage 53, 54 et/ou les freins de roues de l'atterrisseur auxiliaire 50 en cas de défaillance du circuit d'alimentation principal de l'aéronef 1.

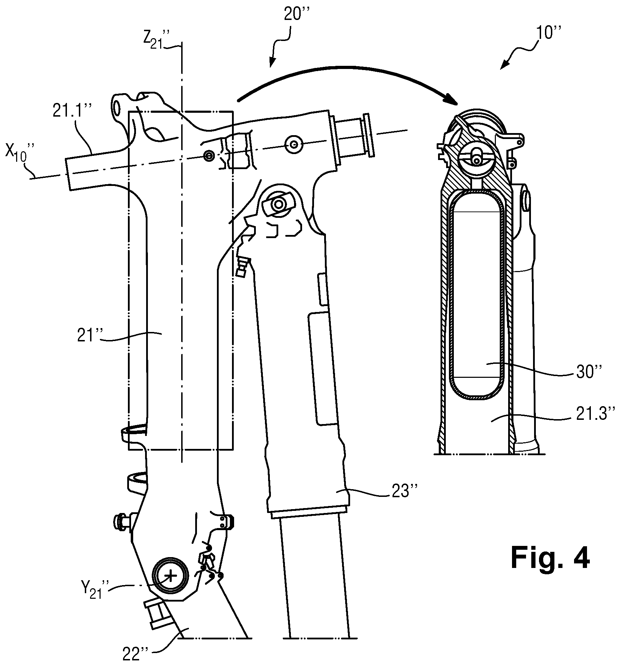

La figure 4 illustre un atterrisseur principal 10'' qui n'est autre qu'une variante des atterrisseurs principaux 10, 10'. L'atterrisseur principal 10'' comprend une jambe 20'' comportant un caisson 21'' rigide dont une extrémité supérieure est articulée sur la structure de l'aéronef 1 selon l'axe X₂₀, et un balancier 22'' articulé sur une extrémité inférieure du caisson 21" selon un axe Y₂₁'' sensiblement orthogonal à la direction d'avancement de l'aéronef 1. Une extrémité du balancier 22" est pourvue d'un essieu sur lequel les roues R_{f} sont montées à rotation. Un amortisseur 23" relie le caisson 21" au balancier 22".

Le caisson 21" a globalement la forme d'un T comprenant une partie supérieure rectiligne venant s'articuler sur la structure de l'aéronef 1 par l'intermédiaire d'un pivot 21.1" d'axe X₁₀, et une partie inférieure rectiligne comprenant, selon l'invention, une cavité 21.3" dans laquelle est intégralement logé un accumulateur hydraulique 30''. La cavité 21.3'' et l'accumulateur 30'' sont de forme globalement cylindrique et s'étendent coaxialement suivant un axe Z₂₁" . Une surface extérieure de l'accumulateur 30" est conformée pour coopérer avec une surface intérieure de la cavité 21.3'' de manière à réaliser un centrage court de l'accumulateur dans ladite cavité 21.3''. La surface extérieure comprendra par exemple trois bossages répartis à 120 degrés et formant une portée sensiblement cylindrique. Une platine de centrage verrouillée par un segment ménagé à une extrémité de la cavité 213" assure l'immobilisation de l'accumulateur à l'intérieur de ladite cavité 21.3".

L'accumulateur 30'' a ici un diamètre sensiblement égal à 100 millimètres et une longueur sensiblement égale à 410 millimètres pour un volume interne utile sensiblement égal à 3 litres.

L'extrémité de la cavité 21.3'' débouche sur l'extrémité inférieure du caisson 21" et permet à l'accumulateur 30'' d'être inséré sous forme de cartouche amovible dans ladite cavité 21.3'' moyennant le démontage du balancier 22". Un obturateur (non représenté) pouvant être solidaire de l'accumulateur 30'' vient refermer la cavité afin d'isoler ledit accumulateur 30'' de l'extérieur et ainsi le protéger des agressions extérieures (projections d'eau, de graviers...) .

De manière similaire à l'accumulateur 30, l'accumulateur 30'' forme une réserve de fluide sous pression reliée :
- à tout ou partie des boitiers d'accrochage 13, 13' de manière à permettre le décrochetage des crochets 13.1, 13.1' et donc le déploiement des atterrisseurs principaux 10, 10' en cas de défaillance de la source de fluide sous pression P ou du circuit hydraulique reliant ladite source de fluide sous pression P auxdits boitiers d'accrochage 13, 13' ; et/ou
- à tout ou partie des boitiers d'accrochage 14, 14' de manière à permettre le décrochetage des crochets 14.1, 14.1' et donc l'ouverture des trappes 11, 11' en cas de défaillance de la source de fluide sous pression P ou du circuit hydraulique reliant ladite source de fluide sous pression P auxdits boitiers d'accrochage 14, 14' ; et/ou
- à tout ou partie des freins des roues R_{f}, R_{f}' de manière à permettre le freinage desdites roues R_{f}, R_{f}' et donc le ralentissement et le maintien à l'arrêt de l'aéronef 1 en cas de défaillance de la source de fluide sous pression P ou du circuit hydraulique reliant ladite source de fluide sous pression P auxdits freins des roues R_{f}, R_{f}' .

L'accumulateur 30" forme ainsi une source d'énergie de secours permettant d'alimenter les boîtiers d'accrochage 13, 13', 14, 14' et/ou les freins des roues Rf, Rf' en cas de défaillance du circuit d'alimentation principal de l'aéronef 1.

L'accumulateur 30" est relié aux actionneurs de déverrouillage des boitiers d'accrochage 13, 13', 14, 14' via un tuyau rigide traversant la caisson 21 en partie haute (au niveau de l'axe X₁₀) ou en partie basse (au niveau de l'axe Y₂₁") et qui remonte le long du caisson pour être raccordé à un tuyau souple autorisant le déploiement et le relevage de l'atterrisseur 10".

Un tel agencement des accumulateurs 30, 30', 30" présentent les avantages suivants :
- installation des accumulateurs 30, 30',30" plus près des boîtiers d'accrochage 13, 13', 14, 14' et des freins des roues R_{f}, R_{f}' ;
- libération de place et de contraintes induites sur d'autres équipements agencés dans les soutes recevant les atterrisseurs 10, 10', 10" ;
- respect des exigences réglementaires imposant une séparation physique entre les équipements de secours d'une distance au moins égale à 1,54 mètre pour pallier au risque d'explosion (certification CS 25.795).

De préférence, on choisira des accumulateurs ne nécessitant pas ou que peu de maintenance, en particulier lorsque le changement de l'accumulateur nécessite le démontage du balancier comme c'est le cas pour l'atterrisseur 10".

Bien entendu, l'invention n'est pas limitée au mode de réalisation décrit mais englobe toute variante entrant dans le champ de l'invention telle que définie par les revendications.

Bien que les accumulateurs 30, 30', 30'' soient ici hydrauliques, ils peuvent aussi être électriques et ainsi se présenter sous la forme de batteries (par exemple de type électrochimique), notamment lorsque le frein et/ou le système de déverrouillage des atterrisseurs et/ou des trappes est électrique.

Par caisson, on entend toute partie de l'atterrisseur qui est capable de reprendre des efforts d'atterrissage et qui délimite un logement pour l'accumulateur, que ce soit le caisson du vérin amortisseur formant la jambe elle-même, un balancier ou un autre élément de l'atterrisseur. L'atterrisseur auxiliaire 50 peut ainsi comprendre une jambe comportant un caisson articulé sur la structure de l'aéronef et dans lequel est intégré un accumulateur.

L'accumulateur 30, 30' peut être relié à tout actionneur présent dans un atterrisseur, comme un vérin à griffe utilisé en lieu et place d'un boîtier d'accrochage.

## Revendications

1. Jambe (20, 20', 20'') pour atterrisseur (10, 10', 10'') d'aéronef (1), comprenant un caisson (21, 21', 21") agencé pour reprendre des efforts d'atterrissage et pourvu d'une cavité (21.3, 21.3', 21.3") dans laquelle est logé un accumulateur (30, 30', 30'') d'énergie, **caractérisé en ce que** l'accumulateur est sous forme d'une cartouche amovible insérable dans la cavité.

2. Jambe (20, 20', 20") selon la revendication 1, dans laquelle l'accumulateur (30, 30', 30") est hydraulique.

3. Jambe (20, 20', 20") selon la revendication 1, dans laquelle l'accumulateur (30, 30', 30") est une batterie électrochimique.

4. Jambe (20, 20') selon l'une quelconque des revendications précédentes, comprenant une tige (22, 22') formant amortisseur coulissant dans le caisson, une extrémité de la tige portant au moins une roue.

5. Jambe (20") selon l'une quelconque des revendications 1 à 3, comprenant un balancier (22') articulé sur le caisson (21) et un amortisseur (23") reliant le balancier au caisson, une extrémité du balancier portant au moins une roue.

6. Atterrisseur (10, 10', 10") d'aéronef (1) comprenant une jambe (20, 20', 20'') selon l'une quelconque des revendications 1 à 5.

7. Aéronef (1) comprenant au moins un atterrisseur (10, 10', 10'') selon la revendication 6.

8. Aéronef (1) selon la revendication 7, dans lequel le caisson (21, 21', 21") de l'atterrisseur (10, 10', 10'') est articulé sur une structure de l'aéronef.

9. Procédé de déploiement de secours d'un atterrisseur (10, 10', 10") selon la revendication 6, mettant en œuvre l'accumulateur (30, 30', 30") intégré à la jambe (20, 20', 20") de l'atterrisseur.

## Patentansprüche

1. Bein (20, 20', 20") für ein Fahrwerk (10, 10', 10") eines Luftfahrzeugs (1), umfassend einen Kasten (21, 21', 21"), welcher dafür ausgelegt ist, Landebelastungen aufzunehmen, und welcher mit einem Hohlraum (21.3, 21.3', 21.3") versehen ist, in welchem ein Energiespeicher (30, 30', 30") untergebracht ist, **dadurch gekennzeichnet, dass** der Speicher als herausnehmbare Einbaupatrone ausgebildet ist, die in den Hohlraum einsetzbar ist.

2. Bein (20, 20', 20") nach Anspruch 1, wobei es sich bei dem Speicher (30, 30', 30") um einen Hydraulikspeicher handelt.

3. Bein (20, 20', 20") nach Anspruch 1, wobei es sich bei dem Speicher (30, 30', 30") um eine elektrochemische Batterie handelt.

4. Bein (20, 20') nach einem der vorhergehenden Ansprüche, umfassend eine Dämpferstange (22, 22'), die in dem Kasten gleitet, wobei ein Ende der Stange zumindest ein Rad trägt.

5. Bein (20") nach einem der Ansprüche 1 bis 3, umfassend einen an dem Kasten (21") angelenkten Balancier (22') und einen den Balancier mit dem Kasten verbindenden Dämpfer (23"), wobei ein Ende des Balanciers zumindest ein Rad trägt.

6. Fahrwerk (10, 10', 10") eines Luftfahrzeugs (1), umfassend ein Bein (20, 20', 20") nach einem der Ansprüche 1 bis 5.

7. Luftfahrzeug (1), umfassend zumindest ein Fahrwerk (10, 10', 10") nach Anspruch 6.

8. Luftfahrzeug (1) nach Anspruch 7, wobei der Kasten (21, 21', 21") des Fahrwerks (10, 10', 10") an einer Struktur des Luftfahrzeugs angelenkt ist.

9. Verfahren zum Not-Ausfahren eines Fahrwerks (10, 10', 10") nach Anspruch 6, in welchem der in dem Fahrwerkbein (20, 20', 20") integrierte Speicher (30, 30', 30") zum Einsatz kommt.

## Claims

1. Strut (20, 20', 20'') for aircraft (1) landing gear (10, 10', 10''), comprising a casing (21, 21', 21") arranged to take up landing forces and provided with a cavity (21.3, 21.3', 21.3") in which an energy accumulator (30, 30', 30'') is housed, **characterised in that** the accumulator is in the form of a removable cartridge which can be inserted in the cavity.

2. Strut (20, 20', 20'') according to claim 1, wherein the accumulator (30, 30', 30'') is hydraulic.

3. Strut (20, 20', 20'') according to claim 1, wherein the accumulator (30, 30', 30'') is an electrochemical battery.

4. Strut (20, 20') according to any one of the preceding claims, comprising a rod (22, 22') forming a damper sliding into the casing, an end of the rod carrying at least one wheel.

5. Strut (20") according to any one of claims 1 to 3, comprising a rocker arm (22') articulated on the casing (21'') and a damper (23'') connecting the rocker arm to the casing, an end of the rocker arm carrying at least one wheel.

6. Aircraft (1) landing gear (10, 10', 10'') comprising a strut (20, 20', 20") according to any one of claims 1 to 5.

7. Aircraft (1) comprising at least one landing gear (10, 10', 10'') according to claim 6.

8. Aircraft (1) according to claim 7, wherein the casing (21, 21', 21'') of the landing gear (10, 10', 10'') is articulated on a structure of the aircraft.

9. Method for emergency deployment of a landing gear (10, 10', 10'') according to claim 6, using the accumulator (30, 30' , 30'') integrated in the strut (20, 20', 20'') of the landing gear.
